# EUROPÄISCHE PATENTSCHRIFT

(11) **EP 1 428 688 B1**
(45) Veröffentlichungstag und Bekanntmachung des Hinweises auf die Patenterteilung: **20.02.2008**
(21) Anmeldenummer: 03023057.7
(22) Anmeldetag: 14.10.2003
(51) Int. Cl.: B60C 11/12, B60C 11/11

(54) **Fahrzeugluftreifen zum Einsatz unter winterlichen Fahrbedingungen**
Vehicle pneumatic tire for use under winter drive conditions
Bandage pneumatique de véhicule pour utilisation dans des conditions de conduite hivernales

(30) Priorität: 10.12.2002 DE 10257487
(43) Veröffentlichungstag der Anmeldung: 16.06.2004
(60) Teilanmeldung: 06115189.0
(73) Patentinhaber: Continental Aktiengesellschaft, 30165 Hannover (DE)
(72) Erfinder: Diensthuber, Franz, 30167 Hannover (DE); Schlittenhard, Jan, 30900 Wedemark (DE)

(56) Entgegenhaltungen:
- EP-A- 0 826 523
- EP-A- 1 070 606
- US-A- 4 934 424
- US-A1- 2001 035 244
- PATENT ABSTRACTS OF JAPAN Bd. 0164, Nr. 14 (M-1303), 2. September 1992 (1992-09-02) -& JP 04 138902 A (YOKOHAMA RUBBER CO LTD:THE), 13. Mai 1992 (1992-05-13)

## Beschreibung

Die Erfindung betrifft einen Fahrzeugluftreifen zum Einsatz unter winterlichen Fahrbedingungen gemäß dem Oberbegriff des Patentanspruches 1.

Gattungsgemäße Fahrzeugluftreifen, nämlich Winterreifen, sind beispielsweise aus der DE 196 35 147 A1 bekannt. Üblicherweise weisen derartige Winterreifen Umfangsrillen, Schrägrillen und/oder Querrillen auf, welche eine Vielzahl von Profilblöcken trennen, welche bei moderneren Konzeptionen schräg zur Umfangsrichtung des Reifen und schräg zueinander verlaufen bzw. angeordnet sind, so dass das Laufstreifenprofil insgesamt pfeilartig untergliedert ist. Die Profilblockelemente innerhalb der Laufstreifenmitte, wie auch die Profilblöcke im Schulterbereich des Reifens weisen Feineinschnitte auf, welche fälschlicherweise als Lamellen bezeichnet werden. Diese Feineinschnitte weisen in Aufsicht auf das Laufstreifenprofil einen meanderförmigen, zickzackförmigen oder geraden Verlauf auf und können im Radialschnitt ebenso gerade, schräg oder dreidimensional sein. Aus der EP-A-1070606 ist ein Fahrzeugreifen zum Einsatz unter winterlichen Fahrbedingungen bekannt geworden, dessen Profilblöcke zwei Gruppen von in Profilaufsicht entgegengesetzt in Bezug auf die Umfangsrichtung ansteigende Feineinschnitte aufweisen. Die Feineinschnitte beider Gruppen kreuzen einander im mittigen Profilblockbereich auf einer in Umfangsrichtung angeordneten (gedachten) Linie. Hierdurch ist eine Verdopplung der Feineinschnitte im mittigen Blockbereich geschaffen, die die Profilblocksteifigkeit im mittigen Blockbereich sprunghaft herabsetzt.

Durch die Feineinschnitte entstehen beim Betrieb des Reifens eine Vielzahl von sich öffnenden und wieder schließenden Kanten und Spalten, welche sich beim Fahren auf Schnee und Eis in die derart ausgebildete Fahrbahnoberfläche einkrallen und ein sicheres Fahrverhalten unter winterlichen Bedingungen ermöglichen sollen.

Profilblöcke mit Feineinschnitten haben sich seit langem für Winterreifen bewährt. Dennoch können bisherige Lösungen nicht in allen Punkten befriedigen. Insbesondere in Bezug auf das Traktions- und Bremsvermögen von Winterreifen ist noch Raum für Verbesserungen. Entsprechend ist es die Aufgabe der vorliegenden Erfindung, eine Verbesserung von bekannten Winterreifen hinsichtlich der Wintereigenschaften und des Vermögens des Übertragens von Traktions- und Bremskräften.

Diese Aufgabe wird erfindungsgemäß mit einem Reifen gelöst, welcher die Merkmale des Patentanspruchs 1 aufweist.

Bei der Ausgestaltung eines Fahrzeugluftreifens gemäß Patentanspruch 1 wird die Aufgabe also dadurch gelöst, dass von Feineinschnitten eingeschlossene Profilblocksegmente des Profilblocks ungleich breit sind, wobei die Breite dieser Profilblocksegmente zur Mitte des Profilblocks hin geringer ist als die Breite der Profilblocksegmente an der Außenseite bzw. an den Außenkanten des Profilblocks.

Mit dieser Lösung entfernen sich die Erfinder bewusst von herkömmlichen Ansätzen, nach denen versucht wurde, den Abstand der Feinabschnitte zueinander und damit die Breite der von den Feineinschnitten eingeschlossenen Profilblocksegmenten möglichst gleichzuhalten. Die Erfinder haben aber herausgefunden, dass sich die Wintereigenschaften mit ihrer Lösung deutlich verbessern lassen, weil hierdurch die Blocksteifigkeit bzw. die Steifigkeit der Feineinschnitte vergleichmäßigt wird. Denn die von Feineinschnitten begrenzten Profilblocksegmente besitzen am Profilblockrand eine geringere Steifigkeit als die Segmente in der Blockmitte. Dies ist durch unterschiedliche Abstützungs- und Stabilisierungseffekte im Block begründet. Die Steifigkeit der Segmente in der zweiten bis n-ten-Reihe wird durch ihren Nachbarn verstärkt und nimmt von Rand her immer weiter zu. Durch die erfindungsgemäße Lösung wird es ermöglicht, eine gleichmäßigere Profilklotzsegmentsteifigkeit einzustellen, in dem Abstand der Feineinschnitte vom Klotzrand zur Mitte hin variiert, d. h. verkleinert wird. Anders ausgedrückt wird die Steifigkeit der Profilklotzsegmente am Klotzrand erhöht, wohingegen sie in der Blockmitte abgesenkt wird.

Auf diese Weise werden die Wintereigenschaften durch eine gleichmäßigere Steifigkeit der Profilblocksegmente verbessert. Alle Kanten der Feineinschnitte tragen gleichmäßig zur Übertragung von Brems- bzw. Traktionskräften bei, da sich durch die einheitliche Steifigkeit der Kanteneffekt bei allen Feineinschnittkanten gleich stark ausbildet. Ferner können die Feineinschnittanhebungen der am Rand befindlichen Einschnitte durch die erhöhte Steifigkeit kleiner ausgeführt werden, was sich zusätzlich positiv auf die Wintereigenschaft auswirkt.

In einer vorteilhaften Ausgestaltung der Erfindung ist vorgesehen, dass die Breite der Feineinschnitte von der Profilblockkante zur Profilblockmitte hin zunimmt. Es werden unterschiedlich breite Profilblocksegmente mit unterschiedlich breiten Feineinschnitten kombiniert. Bei der vorteilhaften Ausgestaltung nach Patentanspruch 2 werden nämlich die Feineinschnitte bezüglich ihrer Breite über die Länge des Profilklotzes variiert, wobei die Feineinschnittbreite vom Profilklotzrand bis zur Profilklotzmitte hin zunimmt. Hier wird also gezielt eine Asymmetrie durch die Breite der Feineinschnitte selbst erzeugt, wobei neben dem selben Effekt wie oben beschrieben - bei dem durch unterschiedlich breite Feineinschnitte unterschiedlich breite Profilblocksegmente bereitgestellt werden, wodurch die Profilblocksteifigkeit vereinheitlicht wird- ein weiterer Effekt entsteht.

Der weitere Effekt ist der, dass die Öffnungsfähigkeit der Feineinschnitte auf diese Weise zur Profilklotzmitte hin erhöht wird. Bekanntlich presst sich Schnee beim Fahren auf schneebedeckten Fahrbahnen in die Feineinschnitte. Dieser Schnee trägt beträchtlich über Schnee-Schnee-Reibung zum Bremsen und Traktionen bei. Bei herkömmlichen Lösungen presst sich in die blockinneren Feineinschnitte deutlich weniger Schnee ein. Durch die vorteilhafte Ausgestaltung gemäß Patentanspruch 2 erfolgt aber eine sehr viel gleichmäßigere Füllung der Feineinschnitte im Fahrbetrieb, denn die Beweglichkeit der Feineinschnitte in der Klotzmitte wird durch breiter oder dicker ausgeführte Feineinschnitte deutlich erhöht. Hierdurch wird ebenso die Schnee-Schnee-Reibung erhöht, und es wird die Fräswirkung der Feineinschnittkanten verstärkt. Hieraus resultiert eine Verbesserung der Brems- und Traktionseigenschaften des Reifens.

Weitere Vorteile und Ausgestaltungen der Erfindung, welche Gegenstand der weiteren Patentansprüche sind, werden im Folgenden anhand von Ausführungsbeispielen in der Beschreibung und in der Zeichnung näher dargestellt. In der Zeichnung ist
- Fig. 1: die Aufsicht auf ein erstes Ausführungsbeispiel eines Laufstreifenprofils eines erfindungsgemäßen Fahrzeugluftreifens,
- Fig. 2: eine Prinzipskizze eines einzelnen Profilblocks nach dem Stand der Technik,
- Fig. 3: eine Prinzipskizze eines Profilblocks gemäß der Erfindung,
- Fig. 4: ein Ausführungsbeispiel eines Profilblocks,
- Fig. 5: den Profilblock aus Figur 4 im geöffneten Zustand,
- Fig. 6: die Aufsicht auf ein drittes Ausführungsbeispiel eines Laufstreifenprofils,
- Fig. 7: ein Profilblock aus Fig. 6 im geöffneten Zustand, und
- Fig. 8: derselbe Profilblock im normalen Zustand.

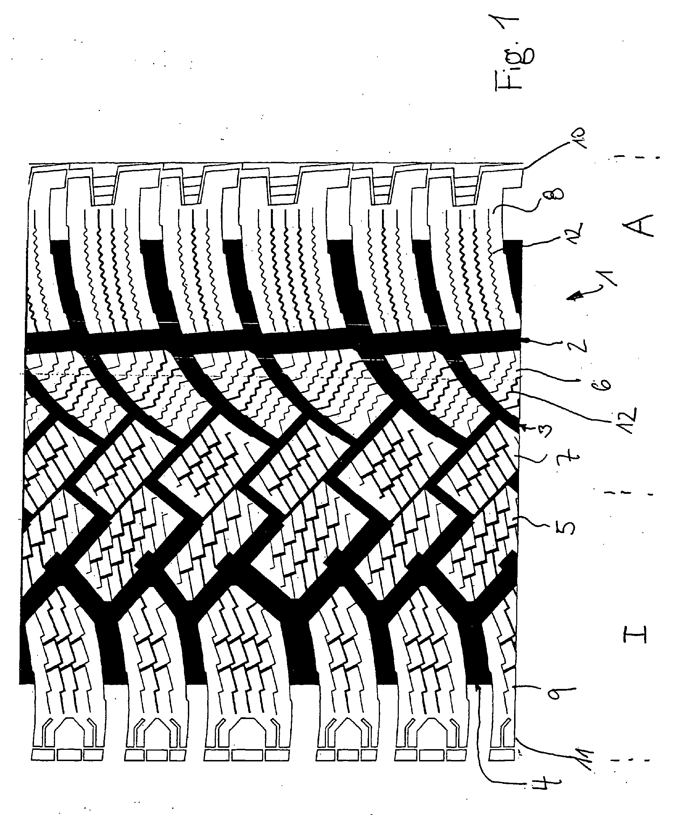

In Figur 1 ist ein erstes Ausführungsbeispiel eines Laufstreifenprofils 1 eines Winterreifens in maßstabsgetreuer Darstellung gezeigt. Der Laufstreifen 1 weist eine Längsrille 2 und eine Reihe von Schrägrillen 3, 4 auf, durch welche der Laufstreifen in eine Reihe von Profilblöcken 5 bis 9 unterteilt wird, wobei die Profilblöcke 8 und 9 die axial außenseitig angeordneten Schulterblockreihen 10 und 11 bilden. Die Profilblöcke 5 bis 9 weisen Feineinschnitte auf, wobei Feineinschnitte 12 der Profilblöcke 6 und 8 einen wellenförmigen Verlauf aufweisen, während Feineinschnitte 13 der Profilblöcke 5, 7 und 9 einen geraden Verlauf aufweisen.

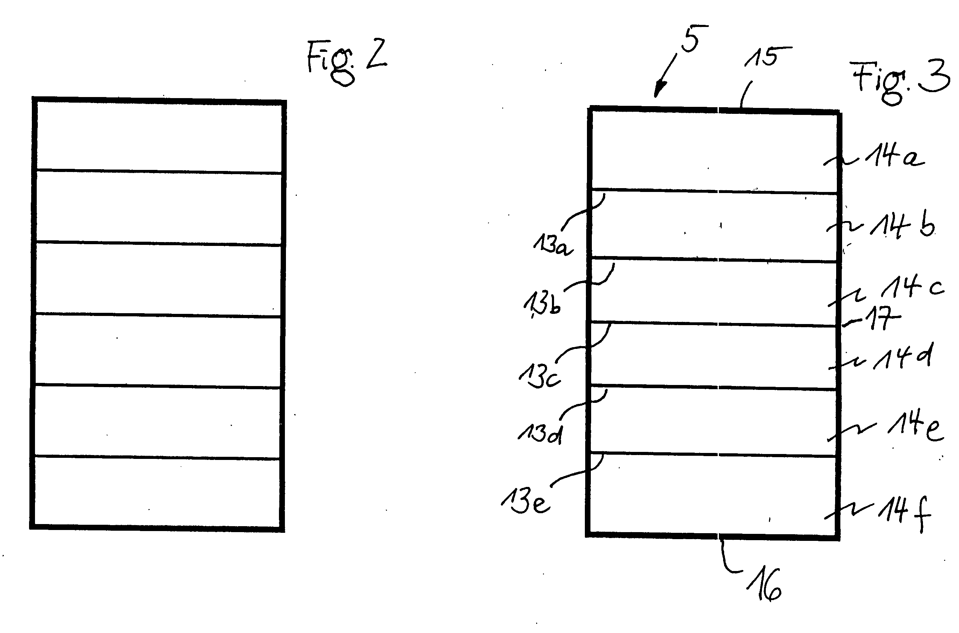

Der prinzipielle Aufbau der Profilblockelemente gemäß der Erfindung ist in den Figuren 3 bis 5 näher dargestellt, während Figur 2 zum besseren Verständnis den normalen Aufbau gemäß dem Stand der Technik darstellt.

In Figur 3 ist eine erste Ausführungsform der erfindungsgemäßen Lösung gemäß Patentanspruch 1 dargestellt. Der dort schematisch dargestellte Profilblock 5 weist fünf Feineinschnitte 13a bis 13 e auf. Die Feineinschnitte 13a bis 13e unterteilen den Profilblock 5 in sechs Profilblocksegmente 14a bis 14f. Die Profilblocksegmente 14a und 14f, welche den parallel zu den Feineinschnitten 13a bis 13e befindlichen Profilblockkanten 15 und 16 am nächsten sind bzw. von diesen begrenzt sind, weisen eine größere Breite auf als die jeweils benachbarten Profilblocksegmente 14b und 14e, welche ihrerseits breiter sind als die Profilsegmente 14c und 14d der Profilblockmitte 17.

Die Breite der Profilblocksegmente 14a bis 14f nimmt also zur Profilblockmitte hin ab, während sie üblicherweise nach dem Stand der Technik, wie in der schematischen Figur 2 dargestellt ist, stets gleichbleibend ist.

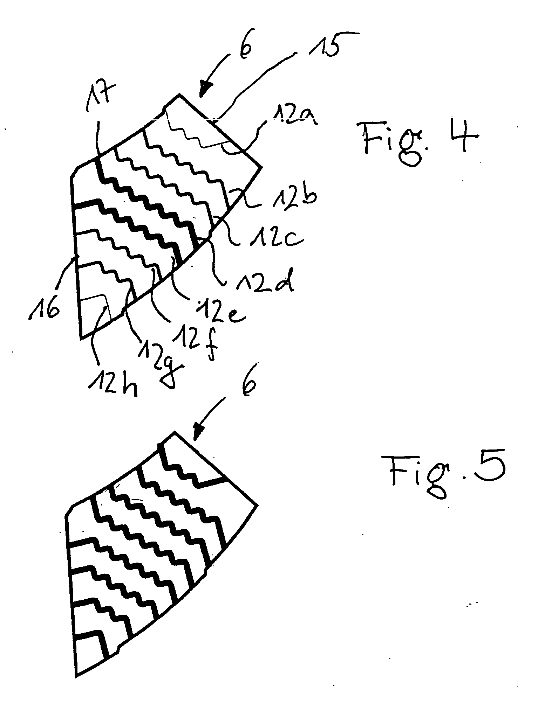

In den Figuren 4 und 5 ist jeweils ein Profilblock 6 dargestellt, welcher mit wellenförmigen Feineinschnitten 12a bis 12h versehen ist. Die Breite bzw. Dicke der Feineinschnitte 12a und 12h ist geringer als die Breite der Feineinschnitte 12b, 12c, 12f und 12g. Wiederum sind die Feineinschnitte 12d und 12e in der Profilblockmitte dicker als alle anderen Feineinschnitte. Die Figur 4 zeigt dabei den Profilblock 6 im normalen, d. h. unbelasteten Zustand, während die Figur 5 den selben Profilblock 6 unter Last im Latsch darstellt. Der in Figur 5 dargestellte Zustand entspricht also dem Zustand, bei dem der Profilblock 6 genau auf der Fahrbahnoberfläche steht. Deutlich zu erkennen ist, dass durch die ungleichmäßige Dicke der Feineinschnitte unter Last eine völlig gleichmäßige Öffnungsbreite entsteht, wodurch Schnee in alle Feineinschnitte gleich weit eindringen kann.

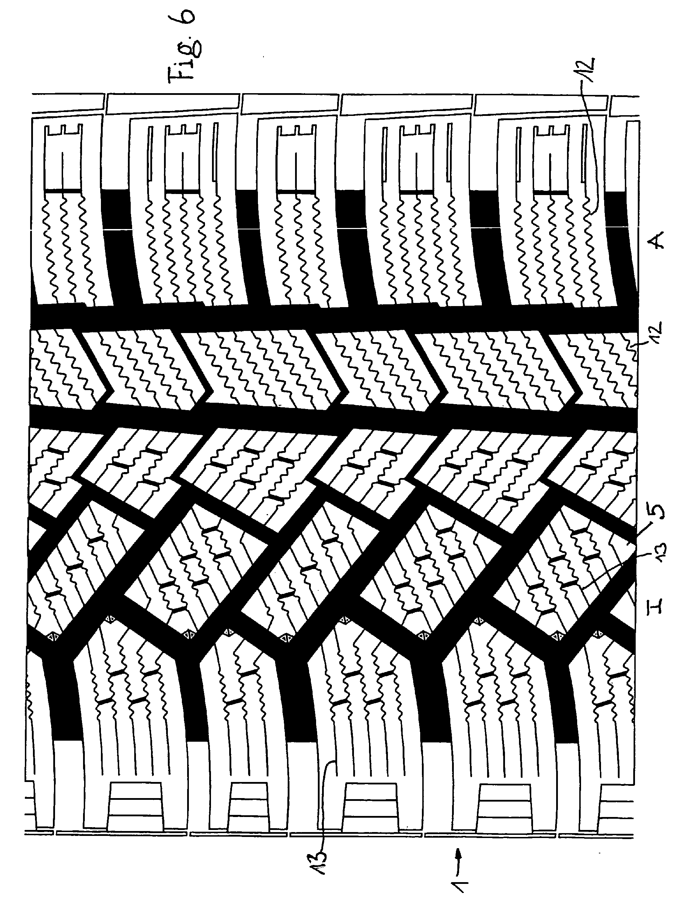

In Fig. 6 ist ein drittes Ausführungsbeispiel eines erfindungsgemäßen Laufstreifens 1 im Maßstab 1:1 dargestellt. Dieser entspricht weitgehend dem Laufstreifen 1 aus Fig. 1, wobei sich die vor allem Feineinschnitte 13 der Profilblöcke der axial inneren Seite I von den Feineinschnitten 13 aus Fig. 1 unterscheiden. Die Profilblöcke der axial äußeren Seite A entsprechen weitgehend denen aus Fig. 1.

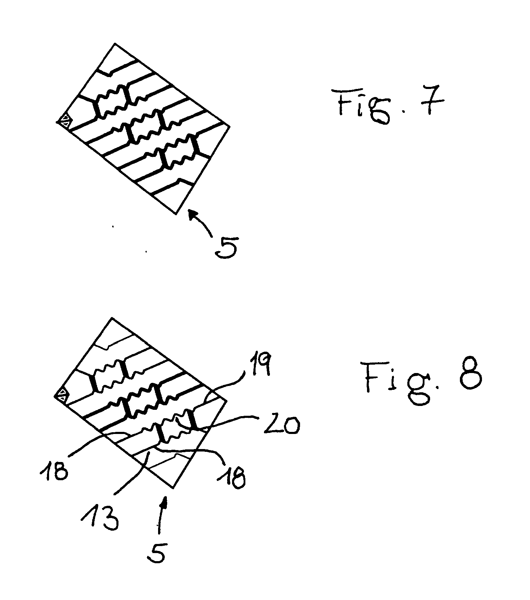

Ein einzelner Profilblock 5 aus Fig. 6 ist in den Fig. 7 und 8 dargestellt. Dieser weist entsprechend dem Profilblock 6 aus den Fig. 4 und 5 Feineinschnitte 13 unterschiedlicher Breite auf, wodurch sich im Zustand unter Last (Fig. 7) gleich breite Spalten einstellen. Die Feineinschnitte 13 gemäß den Figuren 7 und 8 weisen jeweils zu den Längskanten des Profilblocks 5 hin zugewandte Endbereiche 18, 19 auf, welche einen geraden Verlauf aufweisen und durch einen Mittenbereich 20 miteinander verbunden sind, wobei der Mittenbereich einen wellenförmigen Verlauf aufweist.

### Bezugszeichenliste

(Teil der Beschreibung)
- 1: Laufstreifen
- 2: Längsrille
- 3: Schrägrille
- 4: Schrägrille
- 5: Profilblock
- 6: Profilblock
- 7: Profilblock
- 8: Profilblock
- 9: Profilblock
- 10: Schulterblockreihe
- 11: Schulterblockreihe
- 12: Feineinschnitt
- 13 a - e: Feineinschnitt
- 14 a - f: Profilblocksegment
- 15: Profilblockkante
- 16: Profilblockkante
- 17: Profilblockmitte
- 18: Endbereich
- 19: Endbereich
- 20: Mittenbereich

- A: axiale Außenseite des Laufstreifens
- I: axiale Innenseite des Laufstreifens

## Patentansprüche

1. Fahrzeugluftreifen zum Einsatz unter winterlichen Fahrbedingungen, mit einem Laufstreifenprofil (1), welches durch Längsrillen (2) und Schrägrillen (3,4) in von einander getrennte Profilblöcke (5-9) untergliedert ist, wobei die Profilblöcke (5-9) im Wesentlichen parallel zueinander angeordnete Feineinschnitte (12,13) aufweisen, welche im Abstand zu Profilblockkanten (15,16) oder im Abstand zu von Feineinschnitten eingeschlossenen Profilblockkantenabschnitten angeordnet sind, wobei zwei benachbarte Feineinschnitte mit den Profilblockkanten ein Profilblocksegment einschließen und wobei ein äußerer Feineinschnitt mit den Profilblockkanten oder mit den von diesem äußeren Feineinschnitt eingeschlossenen Profilblockkantenabschnitten ein Profilblockkantensegment einschließt,
**dadurch gekennzeichnet, dass**
sich der Abstand der Feineinschnitte zueinander von der Profilblockkante (15,16) oder von den vom Feineinschnitt eingeschlossenen Profilblockkantenabschnitten zur Profilblockmitte (17) verkleinert, derart, dass die von Feineinschnitten (13) eingeschlossenen Profilblocksegmente (14) zur Einstellung einer gleichmäßigeren Profilklotzsegmentsteifigkeit in der Profilblockmitte schmaler sind als die Profilblockkantensegmente im Bereich der Profilblockkante (15,16).

2. Fahrzeugluftreifen nach Anspruch 1, **dadurch gekennzeichnet, dass** die Breite der Feineinschnitte (12) von diesen Profilblockkanten (15; 16) oder von diesen Profilblockkantenabschnitten zur Profilblockmitte (17) hin zunimmt.

3. Fahrzeugluftreifen nach Anspruch 1 und 2, **dadurch gekennzeichnet, dass** die Profilblöcke (5 - 9) ungleich breite Profilblocksegmente (14) und ungleich breite Feineinschnitte (12) aufweisen.

4. Fahrzeugluftreifen nach einem der vorangegangenen Ansprüche, **dadurch gekennzeichnet, dass** die Breite der Feineinschnitte (12, 13) 0,1 mm bis 5 mm, insbesondere 0,3 - 0,8 mm beträgt.

5. Fahrzeugluftreifen nach einem der vorangegangenen Ansprüche, **dadurch gekennzeichnet, dass** die Breite der Profilblocksegmente (14) 2 mm bis 50 mm, insbesondere 3 - 10 mm beträgt.

6. Fahrzeugluftreifen nach einem der vorangegangenen Ansprüche, **dadurch gekennzeichnet, dass** axial innen angeordnete Profilblöcke (5, 7, 9) im Wesentlichen gerade verlaufende Feineinschnitte (13) aufweisen, welche jeweils in einem Profilblock (5; 7; 9) ungleich breite Profilblocksegmente einschließen, während auf der axial äußeren Fahrzeugseite Profilblöcke (6, 8) angeordnet sind, welche wellenlinienartige Feineinschnitte (12) aufweisen, wobei die Feineinschnitte (12) innerhalb eines Profilblocks (6; 8) unterschiedliche Breite aufweisen, derart, dass die zur Profilblockmitte (17) angeordneten Feineinschnitte (12) eine größere Breite aufweisen als die zu den Profilblockkanten (15; 16) hin angeordneten Feineinschnitte (12).

7. Fahrzeugluftreifen nach einem der vorangegangenen Ansprüche, **dadurch gekennzeichnet, dass** axial innen angeordnete Profilblöcke (5, 7, 9) Feineinschnitte (13) aufweisen, welche jeweils in einem Profilblock (5; 7; 9) ungleich breite Profilblocksegmente einschließen, wobei die Feineinschnitte (13) der axial inneren Seite (I) jeweils zwei gerade verlaufende Endbereiche (18, 19) und einen wellenartig verlaufenden Mittenbereich (20) aufweisen, während auf der axial äußeren Fahrzeugseite Profilblöcke (6, 8) angeordnet sind, welche wellenlinienartige Feineinschnitte (12) aufweisen, wobei die Feineinschnitte (12) innerhalb eines Profilblocks (6; 8) unterschiedliche Breite aufweisen, derart, dass die zur Profilblockmitte (17) angeordneten Feineinschnitte (12) eine größere Breite aufweisen als die zu den Profilblockkanten (15; 16) hin angeordneten Feineinschnitte (12).

8. Fahrzeugluftreifen nach einem der vorangegangenen Ansprüche, **dadurch gekennzeichnet, dass** die Feineinschnitte (12, 13) jeweils parallel zu diesen Profilblockkanten (15, 16) angeordnet sind.

9. Fahrzeugluftreifen nach einem der vorangegangenen Ansprüche, **dadurch gekennzeichnet, dass** die Breite der Feineinschnitte (12, 13) von diesen Profilblockkanten (15; 16) oder von diesen Profilblockkantenabschnitten zur Profilblockmitte (17) gestaffelt ist in eine Breitenreihung: 0,4 mm - 0,5 mm - 0,5 mm - 0,6 mm.

10. Fahrzeugluftreifen nach einem der der Ansprüche 1 bis 8, **dadurch gekennzeichnet, dass** die Breite der Feineinschnitte (12, 13) von diesen Profilblockkanten (15; 16) oder von diesen Profilblockkantenabschnitten zur Profilblockmitte (17) gestaffelt ist in eine Breitenreihung: 0,4 mm - 0,5 mm - 0,5 mm - 0,6 mm - 0,6 mm - 0,6 mm.

## Claims

1. Pneumatic vehicle tyre for use under winter driving conditions, with a tread strip profile (1), which is subdivided by longitudinal grooves (2) and angled grooves (3, 4) into separate profile blocks (5-9), the profile blocks (5-9) having sipes (12, 13) which are arranged substantially parallel to one another and are arranged at a distance from profile block edges (15, 16) or at a distance from profile block edge portions enclosed by sipes, two adjacent sipes enclosing with the profile block edges a profile block segment and an outer sipe enclosing with the profile block edges or with the profile block edge portions that are enclosed by this outer sipe a profile block edge segment, **characterized in that** the distance of the sipes from one another decreases from the profile block edge (15, 16), or from the profile block edge portions that are enclosed by the sipe, to the profile block centre (17) in such a way that, to set a more uniform profile block segment rigidity, the profile block segments (14) that are enclosed by sipes (13) in the profile block centre are narrower than the profile block edge segments in the region of the profile block edge (15, 16).

2. Pneumatic vehicle tyre according to Claim 1, **characterized in that** the width of the sipes (12) increases from these block profile edges (15; 16), or from these profile block edge portions, to the profile block centre (17).

3. Pneumatic vehicle tyre according to Claims 1 and 2, **characterized in that** the profile blocks (5-9) have profile block segments (14) of unequal width and sipes (12) of unequal width.

4. Pneumatic vehicle tyre according to one of the preceding claims, **characterized in that** the width of the sipes (12, 13) is 0.1 mm to 5 mm, in particular 0.3-0.8 mm.

5. Pneumatic vehicle tyre according to one of the preceding claims, **characterized in that** the width of the profile block segments (14) is 2 mm to 50 mm, in particular 3-10 mm.

6. Pneumatic vehicle tyre according to one of the preceding claims, **characterized in that** profile blocks (5, 7, 9) arranged axially on the inside have substantially straight sipes (13), which respectively enclose in a profile block (5; 7; 9) profile block segments of unequal width, while profile blocks (6, 8) which have wavy sipes (12) are arranged on the axially outer side of the vehicle, the sipes (12) within a profile block (6; 8) having different widths in such a way that the sipes (12) that are arranged towards the profile block centre (17) have a greater width than the sipes (12) that are arranged towards the profile block edges (15; 16).

7. Pneumatic vehicle tyre according to one of the preceding claims, **characterized in that** profile blocks (5, 7, 9) arranged axially on the inside have sipes (13) which respectively enclose in a profile block (5; 7; 9) profile block segments of unequal width, the sipes (13) of the axially inner side (I) respectively having two straight end regions (18, 19) and a wavy central region (20), while profile blocks (6, 8) which have wavy sipes (12) are arranged on the axially outer side of the vehicle, the sipes (12) within a profile block (6; 8) having different widths in such a way that the sipes (12) that are arranged towards the profile block centre (17) have a greater width than the sipes (12) that are arranged towards the profile block edges (15; 16).

8. Pneumatic vehicle tyre according to one of the preceding claims, **characterized in that** the sipes (12, 13) are respectively arranged parallel to these profile block edges (15, 16).

9. Pneumatic vehicle tyre according to one of the preceding claims, **characterized in that** the width of the sipes (12, 13) is staggered from these profile block edges (15; 16) or from these profile block edge portions to the profile block centre (17) in a width sequence: 0.4 mm - 0.5 mm - 0.5 mm - 0.6 mm.

10. Pneumatic vehicle tyre according to one of Claims 1 to 8, **characterized in that** the width of the sipes (12, 13) is staggered from these profile block edges (15; 16) or from these profile block edge portions to the profile block centre (17) in a width sequence: 0.4 mm - 0.5 mm - 0.5 mm - 0.6 mm - 0.6 mm - 0.6 mm.

## Revendications

1. Bandage pneumatique pour véhicule, destiné à être utilisé en conditions hivernales, dont le profil (1) de bande de roulement est divisé par des rainures longitudinales (2) et des rainures obliques (3, 4) en blocs profilés (5-9) séparés les uns des autres, les blocs profilés (5-9) présentant de fines entailles (12, 13) disposées essentiellement en parallèle les unes aux autres et à distance des bords (15, 16) des blocs profilés ou à distance des parties de bord de bloc profilé entourées par les fines entailles, deux fines entailles voisines entourant avec les bords de bloc profilé un segment de bloc profilé et une fine entaille extérieure entourant avec les bords de bloc profilé ou les parties de bord de bloc profilé entourées par ces fines entailles extérieures un segment de bord de bloc profilé,
**caractérisé en ce que** la distance entre les fines entailles et les bords (15, 16) de bloc profilé ou les parties de bord de bloc profilé entourées par la fine entaille diminue en direction du milieu (17) du bloc profilé de telle sorte que les segments (14) de bloc profilé entourés par les fines entailles (13) sont plus étroits que les segments de bord de bloc profilé situés dans la zone des bords (15, 16) de bloc profilé, pour uniformiser la rigidité des segments de bloc profilé.

2. Bandage pneumatique pour véhicule selon la revendication 1, **caractérisé en ce que** la largeur des fines entailles (12) augmente entre ces bords (15, 16) de bloc profilé ou ces parties de bord de bloc profilé et le milieu (17) des blocs profilés.

3. Bandage pneumatique pour véhicule selon les revendications 1 et 2, **caractérisé en ce que** les bords profilés (5-9) ont des segments (14) de bloc profilé de différentes largeurs et de fines entailles (12) de différentes largeurs.

4. Bandage pneumatique pour véhicule selon l'une des revendications précédentes, **caractérisé en ce que** la largeur des fines entailles (12, 13) est comprise entre 0,1 mm et 5 mm et en particulier entre 0,3 et 0,8 mm.

5. Bandage pneumatique pour véhicule selon l'une des revendications précédentes, **caractérisé en ce que** la largeur des segments (14) de bloc profilé est de 2 mm à 50 mm et en particulier de 3 à 10 mm.

6. Bandage pneumatique pour véhicule selon l'une des revendications précédentes, **caractérisé en ce que** des blocs profilés (5, 7, 9) disposés du côté intérieur dans le sens axial présentent de fines entailles (13) qui s'étendent essentiellement en ligne droite et qui entourent des segments de bloc profilé de différentes largeurs dans un bloc profilé (5; 7; 9), des blocs profilés (6, 8) qui présentent de fines entailles (12) en ligne ondulée étant disposés sur le côté du véhicule situé axialement à l'extérieur, les fines entailles (12) situées à l'intérieur d'un bloc profilé (6; 8) ayant des largeurs différentes de telle sorte que les fines entailles (12) disposées en direction (17) du milieu des blocs profilés ont une plus petite largeur que les fines entailles (12) disposées vers les bords (15; 16) des blocs profilés.

7. Bandage pneumatique pour véhicule selon l'une des revendications précédentes, **caractérisé en ce que** les blocs profilés (5, 7, 9) disposés à l'intérieur dans la direction axiale présentent de fines entailles (13) qui entourent des segments de bloc profilé de différentes largeurs dans un bloc profilé (5; 7; 9), les fines entailles (13) du côté (I) situé axialement à l'intérieur présentant deux parties d'extrémité (18, 19) qui s'étendent en ligne droite et une partie centrale (20) qui s'étend en ligne ondulée, des blocs profilés (6, 8) qui présentent de fines entailles (12) du type en ligne ondulée étant disposés sur le côté du véhicule situé à l'extérieur dans le sens axial, les fines entailles (12) présentant à l'intérieur d'un bloc profilé (6; 8) des largeurs différentes de telle sorte que les fines entailles (12) disposées vers le milieu (17) du bord profilé ont une plus grande largeur que les fines entailles (12) disposées vers les bords (15; 16) des blocs profilés.

8. Bandage pneumatique pour véhicule selon l'une des revendications précédentes, **caractérisé en ce que** les fines entailles (12, 13) sont toutes disposées parallèlement à ces bords (15, 16) de bloc profilé.

9. Bandage pneumatique pour véhicule selon l'une des revendications précédentes, **caractérisé en ce qu'**entre ces bords (15; 16) de bloc profilé ou ces parties de bord de bloc profilé et le milieu (17) des blocs profilés, la largeur des fines entailles (12, 13) est étagée en une série de largeurs 0,4 mm - 0,5 mm - 0,5 mm - 0,6 mm.

10. Bandage pneumatique pour véhicule selon l'une des revendications 1 à 8, **caractérisé en ce qu'**entre ces bords (15; 16) de bloc profilé ou ces parties de bord de bloc profilé et le milieu (17) des blocs profilés, la largeur des fines entailles (12, 13) est étagée en une série de largeurs 0,4 mm - 0,5 mm - 0,5 mm - 0,6 mm - 0,6 mm - 0,6 mm.
